# EUROPÄISCHE PATENTSCHRIFT

(11) **EP 2 332 401 B1**
(45) Veröffentlichungstag und Bekanntmachung des Hinweises auf die Patenterteilung: **23.03.2016**
(21) Anmeldenummer: 10401208.3
(22) Anmeldetag: 03.12.2010
(51) Int. Cl.: A01C 17/00

(54) **Schleuderstreuer**
Centrifugal spreader
Epandeur d'engrais centrifuge

(30) Priorität: 10.12.2009 DE 102009044852
(43) Veröffentlichungstag der Anmeldung: 15.06.2011
(73) Patentinhaber: Amazonen-Werke H. Dreyer GmbH & Co. KG, 49205 Hasbergen (DE)
(72) Erfinder: Johannaber, Stefan Jan, 49536, Lienen (DE); Krabbe, Ulrich, 49205, Hasbergen (DE); Wiebusch, Thorsten, 49205, Hasbergen (DE); Bäumker, Herbert, 49176, Hilter (DE); Lampert, Tobias, 49504, Lotte (DE)

(56) Entgegenhaltungen:
- EP-A1- 0 380 040
- EP-A2- 0 385 091
- DE-A1- 19 817 742
- DE-A1-102005 030 781

## Beschreibung

Die Erfindung betrifft einen Schleuderstreuer gemäß des Oberbegriffes des Patentanspruches 1. Ein solcher Schleuderstreuer ist aus der EP 0 385 091 A bekannt.

Ein weiterer Schleuderstreuer ist beispielsweise in der DE 196 26 348 A1 beschrieben. Dieser Schleuderstreuer weist eine Auslauföffnung auf, die durch einen Schieber verschließbar ist. An dem Schieber ist unterhalb der Auslauföffnung ein einem Auslaufschacht ähnliches Leitelement angeordnet. Dieses Leitelement ist kastenartig ausgebildet und weist bis auf die Schieberkante, die die Größe der Auslauföffnung einstellt, einen völlig anderen Querschnitt als die Auslauföffnung auf. Die Auslauföffnung bildet zusammen mit dem verstellbaren Schieber die Dosiervorrichtung.

Der Erfindung liegt die Aufgabe zugrunde, eine verbesserte Materialführung durch den Leitschacht von der Auslauföffnung zu den unterhalb der Auslauföffnung angeordneten und mit Wurfelementen bestückten Schleuderscheibe zu schaffen.

Diese Aufgabe wird erfindungsgemäß durch die Merkmale des Anspruchs 1 gelöst.

Infolge dieser Maßnahme werden durch die zumindest teilweise der der Kontur der Auslauföffnung entsprechend ausgestalteten Leitwände des Leitelementes eine verbesserte Zuführung und Zuleitung des ausgebrachten Materiales zu den Wurfelementen der Schleuderscheibe sichergestellt. Die Wände des Leitschachtes bilden zumindest teilweise konturengleich mit der Auslauföffnung entsprechend freigegebenen Dosierquerschnitt der Auslauföffnung zu zumindest zwei Seiten einen verlängerten Führungsbereich für den Düngerstrahl von der Auslauföffnung bis zu den Wurfelementen der Schleuderscheibe. Hierdurch wird eine verbesserte und gleichmäßige Düngerverteilung erreicht.

In einer Ausführungsform ist vorgesehen, dass das Leitelement auf der der Dosierkante des Schiebers abgewandten Seite keine Leitwand aufweist. Infolge dieser Maßnahmen wird in manchen Fällen ein verbesserter Einlauf des Düngers in die Wurfschaufel erreicht.

Um in den verschiedenen Öffnungsstellungen des Schiebers mit den Leitwänden des Leitelementes einen entsprechenden konturengleichen Verlauf der Leitwände mit den Konturen der Auslauföffnung zu erreichen, ist einer Dosiervorrichtung mit einem Dosierschieber, der mittels einer eine Gelenkachse aufweisenden Gelenkanordnung verschwenkbar an der Dosiervorrichtung angeordnet ist vorgesehen, dass die seitlichen Leitwände Kreisabschnitte sind, deren Kreismittelpunkt zumindest annähernd mit der Gelenkachse des Dosierschiebers zusammenfällt.

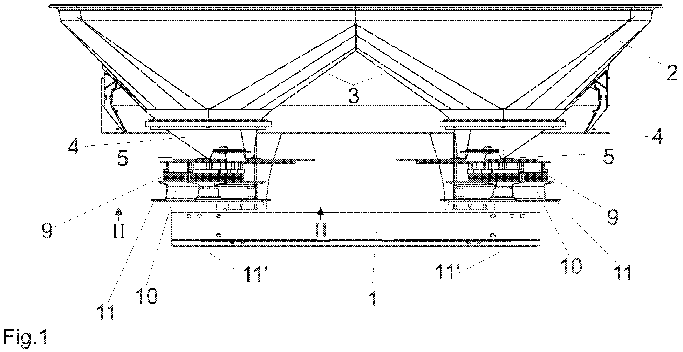

Weitere Einzelheiten der Erfindung sind der Beispielsbeschreibung und den Zeichnungen zu entnehmen. Hierbei zeigen
- Fig. 1: den Schleuderstreuer in der Ansicht von hinten,

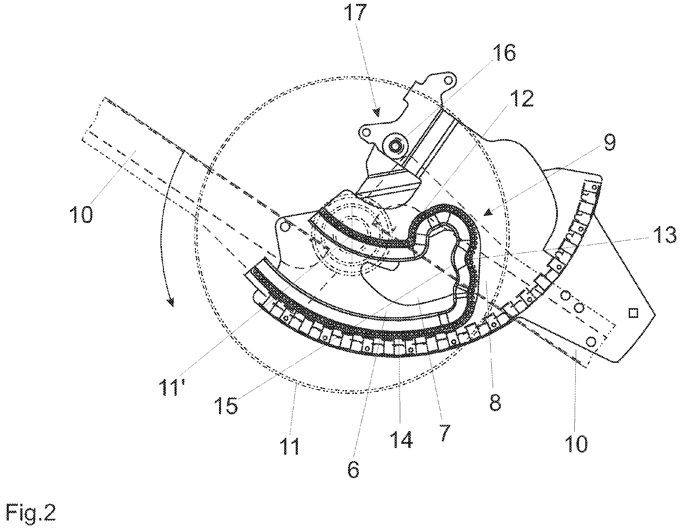

- Fig. 2: das in Fahrtrichtung gesehen linken Dosierorgan in der Ansicht II - II,

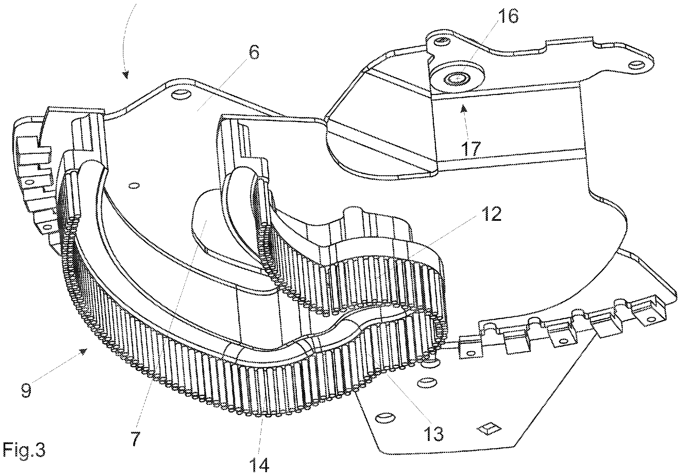

- Fig. 3: das linke Dosierorgan bestehend aus Auslauföffnung mit Dosierschieber und Leitelement in perspektivischer Ansicht von unten,

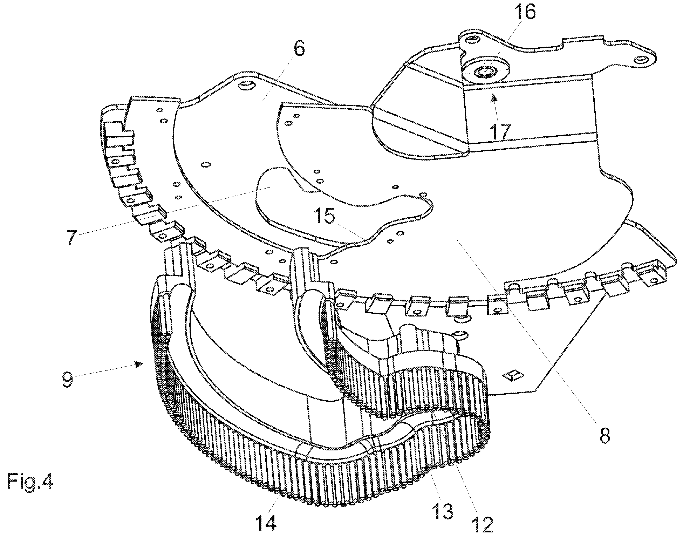

- Fig. 4: das Dosierelement in der Ansicht gemäß Fig. 3, jedoch in Explosionsdarstellung und
- Fig. 5: die Zuordnung von Wurfschaufel, Leitelement, Schieber und Auslauföffnung in der Ansicht V - V.

Der Schleuderstreuer weist einen Rahmen 1 mit daran angeordnetem Vorratsbehälter 2 auf. Der Vorratsbehälter 2 ist durch ein dachförmiges Mittelteil 3 in zwei trichterförmige Auslaufbereiche 4 aufgeteilt. Die unteren Enden der Auslaufbereiche 4 werden durch eine Dosiereinrichtung 5 abgeschlossen. Jede Dosiereinrichtung 5 besteht aus einer in einer Bodenplatte 6 angeordneten Auslauföffnung 7, die über einen Schieber 8 in ihrer Öffnungsweite einstellbar und zu verschließen ist. Unterhalb der Auslauföffnung 7 ist ein nach unten die Auslauföffnung 7 verlängernder einem Auslaufschacht ähnliches Leitelement 9 am Dosierschieber 8 angeordnet. Aus der Auslauföffnung 7 tritt der Streugutstrom im Fallstrom strahlartig aus und wird in einstellbaren Mengen der jeweils unterhalb der Dosiereinrichtung 5 angeordneten und mit Wurfschaufeln 10 besetzten Schleuderscheibe 11 zugeführt. Die Schleuderscheiben 11 werden von einer Kraftquelle in bekannter Weise rotierend angetrieben.

Die Auslauföffnung 7 ist versetzt zu der Achse 11', um welche die Schleuderscheibe 11 umläuft, angeordnet. Die Wurfflügel 10, die auf der Schleuderscheibe 11 angeordnet sind, erstrecken sich über die gesamte radiale Ausdehnung des Streugutstrahles in Richtung zum Umfang der Schleuderscheibe 11. Das Leitelement 9 endet nahe der Oberseite des Wurfflügels 10.

Mittels des Dosierschiebers 8 ist die Auslauföffnung 7 zu verschließen und ihre Öffnungsweite einzustellen. Das Leitelement 9 ist an dem Dosierschieber 8 befestigt und weist Leitwände 12, 13, 14 auf. Die der Dosierkante 15 des Dosierschiebers 8 zugeordnete Leitwand 13 weist zumindest annähernd die Kontur der Dosierkante 15 des Dosierschiebers 8 auf. Die sich an den Bereich der Dosierkante 15 zugeordneten Leitwand 13 sich anschließenden Leitwände 12 und 13 weisen einen an den Konturenverlauf des Seitenbereiches der Auslauföffnung 7 zumindest annähernd angepassten Konturenverlauf auf, wie die Zeichnungen zeigen.

Der Dosierschieber 8 ist mittels einer eine Gelenkachse 16 aufweisenden Gelenkanordnung 17 verschwenkbar an der Bodenplatte 6 der Dosiervorrichtung 5 angeordnet. Die seitlichen Leitwände 12, 14 sind Kreisabschnitte, deren Kreismittelpunkt zumindest annähernd mit der Gelenkachse 16 des Dosierschiebers 8 zusammenfällt. Das Leitelement 9 weist auf der der Dosierkante 15 des Schiebers 8 abgewandten Seite keine Leitwand auf. Hierdurch können die Wurfflügel 10 von der offenen Seite 17 in die von den Leitwänden 12, 13, 14 gebildeten Auslaufschacht des Leitelementes 8 eintreten.

## Patentansprüche

1. Schleuderstreuer für rieselfähiges Gut, insbesondere Dünger, mit einem Vorratsgehälter (2) mit wenigstens einer einstellbaren Auslauföffnung (7) und diese nach unten verlängernde einem Auslaufschacht ähnlichen Leitelement (9) aus dem das Streugut im Fallstrom strahlartig austritt, und einer darunter um eine versetzte Auslauföffnung (7) zum Leitelement (9) angeordnete Achse umlaufenden Schleuderscheibe (11) mit wenigstens einem Wurfflügel (10), der sich über die gesamte radiale Ausdehnung des Streugutstahls in Richtung zum Umfang der Schleuderscheibe (11) erstreckt und nahe dessen Oberseite das Leitelement (9) endet, wobei die Auslauföffnung (7) mittels eines Dosierschiebers (8) zu verschließen und in ihrer Öffnungsweite einzustellen ist, wobei die sich an den Bereich der der Dosierkante (15) zugeordneten Leitwand (13) des Leitelementes (9) sich anschließenden Leitwände (12, 14) eine an den Konturenverlauf des Seitenbereiches der Auslauföffnung (7) zumindest annähernd angepassten Konturenverlauf aufweisen, **dadurch gekennzeichnet, dass** das Leitelement (9) an dem Dosierschieber angeordnet ist und Leitwände aufweist, wobei die der Dosierkante des Dosierschiebers zugeordnete Leitwand zumindest annähernd die Kontur der Dosierkante des Dosierschiebers aufweist.

2. Schleuderstreuer nach Anspruch 1, **dadurch gekennzeichnet, dass** das Leitelement (9) auf der der Dosierkante (15) des Schiebers (8) abgewandten Seite keine Leitwand aufweist.

3. Schleuderstreuer nach Anspruch 1, wobei der Dosierschieber mittels einer eine Gelenkachse aufweisenden Gelenkanordnung verschwenkbar an der Dosiervorrichtung angeordnet ist, **dadurch gekennzeichnet, dass** die seitlichen Leitwände (12, 13) Kreisabschnitte sind, deren Kreismittelpunkt zumindest annähernd mit der Gelenkachse (16) des Dosierschiebers (8) zusammenfällt.

## Claims

1. Centrifugal spreader for pourable material, in particular fertilizer, with a storage container (2) having at least one adjustable discharge opening (7), and a guide element (9) which extends said discharge opening (7) downwards and is similar to a discharge shaft, out of which the material to be spread emerges in a downward flow in the manner of a jet, and with a centrifugal disc (11) which rotates thereunder about an axis arranged offset discharge opening (7) to the guide element (9), said centrifugal disc having at least one thrower blade (10) which extends over the entire radial extent of the spreading material jet in the direction towards the circumference of the centrifugal disc, the guide element (9) ending close to the top side of the said thrower blade, wherein the discharge opening (7) is intended to be closed, and the opening width thereof to be adjusted by means of a metering slide (8), wherein the guide walls (12, 14) adjoining the region of the guide wall (13) of the guide element (9), which guide wall is assigned to the metering edge (15), have a contour profile at least approximately adapted to the contour profile of the side region of the discharge opening (7), **characterized in that** the guide element (9) is arranged on the metering slide and has guide walls, wherein the guide wall assigned to the metering edge of the metering slide at least approximately has the contour of the metering edge of the metering slide.

2. Centrifugal spreader according to Claim 1, **characterized in that** the guide element (9) has no guide wall on the side remote from the metering edge (15) of the slide (8).

3. Centrifugal spreader according to Claim 1, wherein the metering slide is arranged pivotably on the metering device by means of a joint arrangement having a joint axis, **characterized in that** the lateral guide walls (12, 13) are circular sections, the circle centre point of which at least approximately coincides with the joint axis (16) of the metering side (8).

## Revendications

1. Epandeur d'engrais centrifuge pour produit coulant, en particulier de l'engrais, comprenant un réservoir de stockage (2) avec au moins une ouverture de déversement ajustable (7) et un élément de guidage (9) similaire à une goulotte de déversement, prolongeant celle-ci vers le bas, hors duquel le produit à épandre sort en forme de jet en flux descendant et comprenant un disque centrifuge (11) situé en dessous, tournant autour d'un axe disposé ouverture de déversement décalée (7) par rapport à l'élément de guidage (9), avec au moins une ailette d'éjection (10), qui s'étend sur toute l'étendue radiale du jet de produit à épandre dans la direction de la périphérie du disque centrifuge (11) et à proximité du côté supérieur de laquelle se termine l'élément de guidage (9), l'ouverture de déversement (7) pouvant être fermée au moyen d'un tiroir de dosage (8) et pouvant être ajustée dans sa largeur d'ouverture, les parois de guidage (12, 14) se raccordant à la région de la paroi de guidage (13) de l'élément de guidage (9) associée à l'arête de dosage (15) présentant un contour au moins approximativement adapté au contour de la région latérale de l'ouverture de déversement (7), **caractérisé en ce que** l'élément de guidage (9) est disposé au niveau du tiroir de dosage et présente des parois de guidage, la paroi de guidage associée à l'arête de dosage du tiroir de dosage présentant au moins approximativement le contour de l'arête de dosage du tiroir de dosage.

2. Epandeur d'engrais centrifuge selon la revendication 1, **caractérisé en ce que** l'élément de guidage (9) ne présente aucune paroi de guidage du côté opposé à l'arête de dosage (15) du tiroir (8).

3. Epandeur d'engrais centrifuge selon la revendication 1, dans lequel le tiroir de dosage est disposé sur le dispositif de dosage de manière à pouvoir pivoter au moyen d'un agencement articulé présentant un axe d'articulation, **caractérisé en ce que** les parois de guidage latérales (12, 13) sont des portions de cercle dont le centre du cercle coïncide au moins approximativement avec l'axe d'articulation (16) du tiroir de dosage (8).
